# FASCICULE DE BREVET EUROPEEN

(11) **EP 2 124 416 B1**
(45) Date de publication et mention de la délivrance du brevet: **28.11.2018**
(21) Numéro de dépôt: 09159891.2
(22) Date de dépôt: 11.05.2009
(51) Int. Cl.: H04L 29/06

(54) **PROCÉDÉ DE GESTION DE PARAMÈTRES POUR DÉLIVRER DES CONTENUS SPONTANÉS, PROCÉDÉ POUR DÉLIVRER DES CONTENUS SPONTANÉS, PROCÉDÉ POUR FOURNIR DES CONTENUS SPONTANÉS, TERMINAL ET SYSTÈME DISTANT ASSOCIÉS**
STEUERUNGSVERFAHREN VON PARAMETERN ZUR ÜBERTRAGUNG VON SPONTANDATEN, ÜBERTRAGUNGSVERFAHREN VON SPONTANDATEN, VERFAHREN ZUM ERHEBEN VON SPONTANDATEN, ENTSPRECHENDES ENDGERÄT UND ENTSPRECHENDES FERNBEDIENUNGSSYSTEM
METHOD FOR MANAGING PARAMETERS FOR DELIVERING SPONTANEOUS CONTENT, METHOD FOR DELIVERING SPONTANEOUS CONTENT, METHOD FOR SUPPLYING SPONTANEOUS CONTENT, ASSOCIATED TERMINAL AND REMOTE SYSTEM

(30) Priorité: 22.05.2008 FR 0802790
(43) Date de publication de la demande: 25.11.2009
(73) Titulaire: Alcatel Lucent, 91620 Nozay (FR)
(72) Inventeur: Bertoni, Yves, 91620, NOZAY (FR); Betge Brezetz, Stéphane, 91620, NOZAY (FR); Toms, Yann, 91620, NOZAY (FR)
(74) Mandataire: Nokia EPO representatives

(56) Documents cités:
- US-A1- 2002 077 130
- US-A1- 2002 199 010

## Description

L'invention concerne un procédé de gestion d'un jeu de paramètres pour délivrer des contenus spontanés.

L'invention concerne encore un procédé pour délivrer des contenus spontanés.

L'invention concerne également un procédé de transmission sur un réseau de contenus spontanés.

L'invention concerne en outre un terminal et un système distant apte à fournir des contenus spontanés pour la mise en oeuvre de tels procédés.

On entend par réseau, tout type de réseau fixe ou mobile (par exemple de type GSM, GPRS, UMTS ou WiFi, ou encore un réseau Internet, ou un réseau câblé), capable de transmettre, par exemple par voie filaire ou sans fil, des contenus à des terminaux qui sont couplés à lui, et d'échanger avec ces mêmes terminaux des contenus, des données ou des messages.

Tout mode de transmission de contenu peut être envisagé, et notamment le mode point-à-point (ou « unicast ») ou le mode point-à-multipoints (ou « multicast »), ou encore le mode diffusion (ou « broadcast »).

De plus, on entend ici par terminal tout type d'équipement capable de recevoir des contenus d'un réseau du type précité et d'échanger des données, messages et requêtes avec ce même réseau.

Il pourra par exemple s'agir d'un téléphone mobile ou fixe, d'un assistant personnel numérique (ou PDA), d'un décodeur de programmes de télévision ou vidéos cryptés, d'un équipement de réception de programmes de télévision de type « Set-top box », d'un équipement de réception de programmes vidéos ou musicaux, ou d'un ordinateur fixe ou portable, ou d'un équipement embarqué dans un véhicule (voiture, camion, bus, train, et analogues).

Par ailleurs, on entend ici par contenu spontané des ensembles de données définissant un programme vidéo, ou audio (radiophonique ou musical), ou multimédia ou encore un fichier informatique de données (ou « data »), dont la transmission n'est pas forcément le résultat d'une demande de l'utilisateur du terminal.

Un tel contenu spontané peut être délivré de manière indépendante, en aggrégation avec un autre contenu ou encore en association avec une application.

On connaît des systèmes de transmission de contenus spontanés par exemple en utilisant des moyens de communication traditionnels comme la télévision, la radio ou encore les journaux et les magazines.

On connaît également des systèmes de transmission de contenus avec des moyens de communication comme la télécopie, ou encore la technologie SMS pour « Short Message Service » dans la téléphonie mobile.

Toutefois, les contenus spontanés sont transmis de façon aléatoire aux utilisateurs sans répondre à un besoin exprimé de l'utilisateur et ceci quel que soit le moment.

De plus, afin d'atteindre un grand nombre d'utilisateurs les fournisseurs de contenus spontanés transmettent des contenus censés correspondre au plus gros sous-ensemble d'utilisateurs, aussi bien par le format de contenu utilisé que par l'information elle-même.

En effet, l'utilisateur n'a pas toujours la possibilité d'indiquer des préférences concernant des contenus spontanés à recevoir.

Par ailleurs, les contenus spontanés peuvent être transmis à un utilisateur sans son accord préalable.

En conséquence, les utilisateurs peuvent ne pas être réceptifs aux contenus spontanés transmis, diminuant ainsi l'efficacité de cette transmission de contenus spontanés.

L'invention a donc pour but d'améliorer les services connus de contenus spontanés, en permettant à un moment favorable de présenter aux utilisateurs des contenus personnalisés et adaptés à chaque utilisateur.

Le document US-2002/199010 décrit l'état de la technique, concernant un système , méthode et programme d'ordinateur pour analyser la réponse des utilisateurs à des appels téléphoniques ou e mails.

D'autres caractéristiques et avantages de l'invention ressortiront de la description suivante, donnée à titre d'exemple, sans caractère limitatif, en regard des dessins annexés sur lesquels :
- la figure 1 illustre schématiquement le contexte général pour la mise en oeuvre d'un procédé de gestion d'un jeu de paramètres pour délivrer un contenu spontané selon l'invention, d'un procédé pour délivrer des contenus spontanés selon l'invention, et d'un procédé de transmission de contenus spontanés sur un réseau selon l'invention,
- la figure 2a représente les étapes successives d'un procédé de gestion d'un jeu de paramètres pour délivrer des contenus spontanés selon l'invention,
- la figure 2b représente les étapes successives d'un procédé pour délivrer des contenus spontanés selon l'invention,
- la figure 3 représente les étapes successives d'un procédé de transmission de contenus spontanés sur un réseau selon l'invention, et
- la figure 4 représente un exemple de réalisation pour la mise en oeuvre de tels procédés.

Dans la suite de la description les références 1 à 21 sont relatives à un terminal et un système distant apte à fournir des contenus spontanés pour la mise en oeuvre d'un procédé de gestion d'un jeu de paramètres pour délivrer des contenus spontanés, d'un procédé pour délivrer des contenus spontanés et d'un procédé pour fournir des contenus spontanés, tandis que les références 23 à 55 se rapportent aux étapes de ces différents procédés.

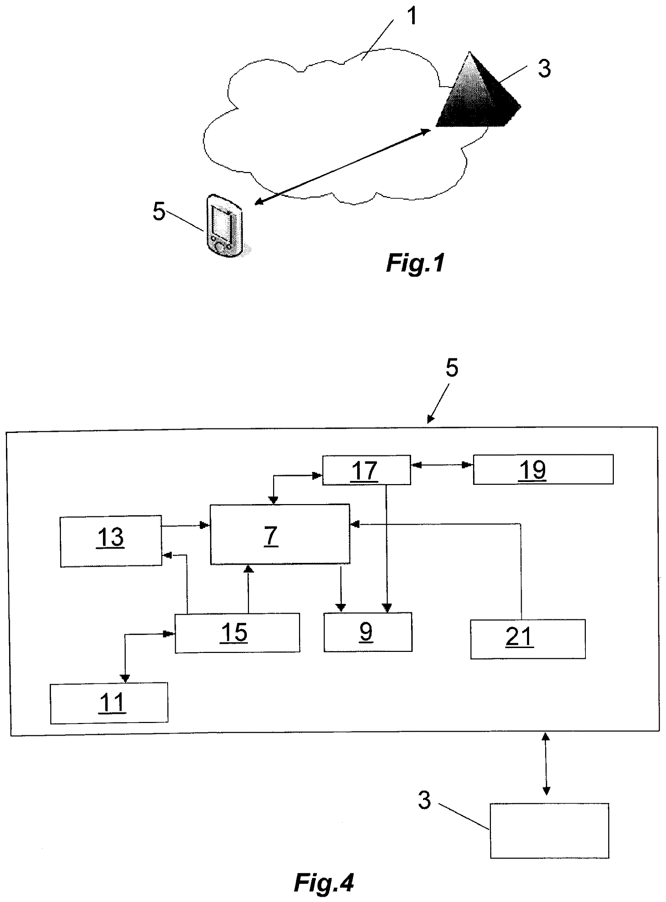

Afin d'illustrer le contexte général de l'invention, on a représenté sur la figure 1 un réseau de télécommunication 1 fixe ou mobile (par exemple de type GSM, GPRS, UMTS ou WIFI ou encore un réseau Internet ou un réseau câblé).

Le réseau 1 peut être tout type de réseau capable de transmettre, par exemple par voie filaire ou sans fil, des contenus à des terminaux qui sont couplés à lui, et d'échanger avec ces mêmes terminaux des données ou des messages.

Tout mode de transmission de contenu peut être envisagé, et notamment le mode point-à-point (ou « unicast ») ou le mode point-à-multipoints (ou « multicast »), ou encore le mode diffusion (ou « broadcast »).

Un système distant 3 apte à fournir des contenus spontanés est relié au réseau 1 et transmet par le réseau 1 des contenus spontanés par exemple sous forme de flux à destination de terminaux 5 aptes à recevoir et à afficher, par exemple sur un écran, les contenus spontanés transmis.

Le contenu spontané transmis par le réseau 1 peut être un programme vidéo, ou audio (radiophonique ou musical), ou multimédia ou encore un fichier informatique de données (ou « data »), dont la transmission n'est pas forcément le résultat d'une demande de l'utilisateur du terminal 5.

Le contenu spontané est par exemple un contenu publicitaire ou encore un contenu informatif.

Ce contenu spontané peut être délivré de manière indépendante, en aggrégation avec un autre contenu ou encore en association avec une application.

Le terminal 5 peut être par exemple un téléphone mobile ou fixe, un assistant personnel numérique (ou PDA), un équipement de réception de programmes audio ou vidéo, ou un ordinateur fixe ou portable, ou encore un équipement embarqué dans un véhicule (voiture, camion, bus, train, et analogues).

De façon générale, le terminal 5 peut être tout type de terminal personnel à un utilisateur ou apte à identifier un utilisateur donné parmi un ensemble d'utilisateurs.

Le terminal 5 est en outre apte à échanger des données, messages et requêtes avec le réseau 1 et en particulier avec le système 3.

C'est dans ce contexte général, que l'on propose, en vue d'améliorer la pertinence des contenus spontanés présentés à un utilisateur :
- un procédé de gestion d'un jeu de paramètres pour délivrer des contenus spontanés, qui servira à compléter des paramètres configurés par l'utilisateur avec des paramètres découverts de façon à toujours correspondre au mieux à l'utilisateur, et de façon à pouvoir anticiper des moments favorables pour délivrer des contenus spontanés à l'utilisateur,
- un procédé pour délivrer des contenus spontanés, qui permettra de déterminer le contenu à délivrer et de détecter le moment pour le délivrer en tirant partie du jeu de paramètres pour délivrer des contenus spontanés, et
- un procédé de transmission sur un réseau de contenus spontanés, qui permettra de fournir au terminal des contenus spontanés à délivrer personnalisés et adaptés à l'utilisateur, de sorte que le terminal puisse enregistrer ces contenus spontanés, et les délivrer lorsque le moment est propice.

On décrira tout d'abord ces procédés selon l'invention, puis les moyens permettant leur mise en oeuvre.

### Procédé de gestion d'un jeu de paramètres pour délivrer des contenus spontanés :

En référence à la figure la, on va maintenant décrire le procédé de gestion d'un jeu de paramètres pour délivrer des contenus spontanés selon l'invention.

Le jeu de paramètres pour délivrer des contenus spontanés peut comporter :
- des informations personnelles sur l'utilisateur comme ses habitudes, son agenda ou ses activités, ou
- des informations qualitatives concernant des contenus spontanés à délivrer, comme les préférences de l'utilisateur sur un domaine de consommation, une catégorie de produits, ou un ensemble de marques, ou
- des informations quantitatives concernant des contenus spontanés à délivrer, ou encore
- des informations temporelles pour définir des moments favorables pour délivrer des contenus spontanés.

En outre, ces paramètres pour délivrer des contenus spontanés peuvent être enrichis avec des informations sur les caractéristiques techniques du terminal 5, de sorte que les contenus spontanés présentés à l'utilisateur prennent pleinement avantage des caractéristiques techniques du terminal 5.

On entend par caractéristiques techniques, des caractéristiques de matériel telles qu'un écran, sa taille, sa résolution ou le nombre de couleurs, ou encore des haut-parleurs, mais également des caractéristiques de logiciel comme les applications ou encore le système d'exploitation.

En effet, certaines de ces caractéristiques techniques de logiciel ou de matériel peuvent permettre au terminal 5 de recevoir des contenus spontanés sous un format particulier qui peut ne pas être compatible avec tous les terminaux.

En conséquence, les formats des contenus spontanés ne sont plus limités et communs à tous les terminaux mais adaptés pour chaque terminal par exemple en ajustant la taille du contenu spontané et en choisissant un format que le terminal est apte à exploiter.

Ce jeu de paramètres pour délivrer des contenus spontanés est préférentiellement configuré par l'utilisateur ou encore importé, et est adaptable de manière à permettre de mieux cibler les contenus spontanés à délivrer à l'utilisateur.

Pour cela, on prend en compte, comme on va le voir plus loin la réaction de l'utilisateur face à un contenu proposé. Le contenu proposé peut être un contenu audiovisuel par exemple des programmes de télévision, ou de radio, ou encore des jeux.

Par ailleurs, ce jeu de paramètres pour délivrer des contenus spontanés est enregistré dans des moyens de mémorisation qui comportent une mémoire persistante, de manière à être conservé durablement.

Lors d'une première étape 23, on délivre au moins un contenu à l'utilisateur d'un terminal 5 afin de scruter sa réaction face à ce contenu.

À cet effet, on détecte à l'étape 25 si l'utilisateur génère sur son terminal une réaction favorable ou non au contenu délivré.

La réaction de l'utilisateur est alors traduite en un paramètre représentatif à l'étape 27.

On entend par réaction favorable, une réaction qui traduit un intérêt de l'utilisateur par rapport au contenu délivré.

Cette réaction favorable peut être par exemple l'autorisation de l'affichage du contenu délivré.

Par ailleurs, on entend par réaction défavorable une absence de réaction ou une réaction interdisant ou supprimant l'affichage du contenu délivré, par une action volontaire de l'utilisateur.

Avantageusement, suite à la réaction de l'utilisateur on associe au moins un paramètre contextuel au contenu délivré, pour déterminer par exemple un nouveau centre d'intérêt de l'utilisateur.

Les paramètres contextuels peuvent comporter une donnée de description du contenu délivré, une donnée de classification du contenu délivré, la localisation géographique du terminal 5, ou encore au moins une information temporelle comme la saison, le jour ou l'heure où le contenu a été délivré.

Les paramètres représentatifs de réactions favorables ou non de l'utilisateur et les paramètres contextuels sont alors enregistrés dans le jeu de paramètres pour délivrer des contenus spontanés de manière à adapter le jeu de paramètres aux centres d'intérêts découverts de l'utilisateur. Le jeu de paramètres pour délivrer des contenus spontanés évolue ainsi régulièrement de manière à toujours être adapté et personnalisé à l'utilisateur au cours du temps.

En effet, on peut imaginer que les centres d'intérêts de l'utilisateur varient par exemple entre le début de l'hiver et la fin du printemps, mais également en fonction des activités de l'utilisateur.

Grâce à ce jeu de paramètres pour délivrer des contenus spontanés, soit configuré par l'utilisateur soit adapté tel que précisé ci-dessus, on établit à l'étape 29 une planification pour délivrer au moins un contenu spontané sélectionné.

On peut en variante prévoir que la planification est établie à partir de l'observation des échanges sur le réseau et de l'utilisation des ressources radio, par exemple sur une journée.

La planification permet ainsi de déterminer des instants propices pour délivrer des contenus spontanés à l'utilisateur.

Cette planification est interne au terminal, ce qui permet de mieux respecter la vie privée de l'utilisateur. En outre l'utilisateur peut configurer les paramètres de cette planification pour garder un certain contrôle sur les contenus qui lui sont délivrés.

Il s'est avéré avantageux de prévoir une étape 31, dans laquelle on génère au moins une information quantitative concernant les réactions favorables de l'utilisateur en rapport avec un contenu délivré.

Il s'agit par exemple du nombre de fois que l'utilisateur a accepté qu'un contenu lui soit délivré, ce qui permet de savoir le nombre de contenus délivrés à l'utilisateur qui ont suscités un intérêt chez lui.

Ces informations quantitatives peuvent être synthétisées sous la forme d'un rapport d'activité du terminal 5, par exemple établi sur un intervalle de temps prédéfini.

Le rapport d'activité du terminal 5 est par la suite envoyé à destination du système 3, par exemple de façon périodique.

Ce rapport d'activité permet de rendre compte au système 3 des réactions de l'utilisateur et de la présentation effective des contenus, ce qui permet de procéder à la taxation des fournisseurs de contenus.

On comprend donc qu'avec un tel procédé le jeu de paramètres pour délivrer des contenus spontanés est adapté de façon évolutive, afin de toujours correspondre au mieux à l'utilisateur.

Ainsi, les paramètres de ce jeu de paramètres peuvent servir de critères pour sélectionner des contenus spontanés à délivrer personnalisés et adaptés à l'utilisateur, et à un moment favorable.

Bien entendu, on comprend aisément que l'ordre de mise en oeuvre des étapes de ce procédé de gestion d'un jeu de paramètres pour délivrer des contenus spontanés peut pour certaines étapes être intervertit sans aller à l'encontre de l'esprit de la présente invention.

### Procédé pour délivrer des contenus spontanés :

Le procédé de gestion d'un jeu de paramètres pour délivrer des contenus spontanés étant un préliminaire nécessaire, on va maintenant décrire, en référence à la figure 1b, le procédé pour délivrer des contenus spontanés selon l'invention, qui tire pleinement bénéfice de l'adaptation dynamique d'un jeu de paramètres pour délivrer des contenus spontanés tel que décrit ci-dessus.

Ce procédé mis en oeuvre par le terminal de l'utilisateur, permet de délivrer un contenu spontané personnalisé et adapté à l'utilisateur, et ceci à un moment opportun pour capter l'attention de l'utilisateur et augmenter ainsi l'efficacité du contenu spontané délivré.

À cet effet, on a accès pour la mise en oeuvre d'un tel procédé, à tout paramètre d'un jeu de paramètres pour délivrer des contenus spontanés configuré par l'utilisateur, importé ou adapté, par exemple selon un procédé de gestion d'un jeu de paramètres pour délivrer des contenus spontanés tel que décrit précédemment.

Dans une première étape 35, on identifie un instant pour délivrer un contenu spontané.

Pour cela, on analyse avantageusement une planification pour délivrer au moins un contenu spontané, établie tel que précisé précédemment.

Dans ce cas, lorsqu'un instant propice est anticipé à partir de la planification, on peut prévoir une étape dans laquelle on transmet avant l'instant identifié, une information concernant l'identification d'un instant pour délivrer un contenu spontané à destination du système 3. Cette information peut être transmise sous la forme d'un événement de disponibilité d'emplacement, en anglais « Slot Availability Event ».

De façon avantageuse, on transmet également tout paramètre du jeu de paramètres pour délivrer des contenus spontanés utile au système 3 pour sélectionner et envoyer un contenu spontané adapté à l'utilisateur.

À la suite, on reçoit un contenu spontané envoyé par le système 3, puis on enregistre le contenu spontané reçu, par exemple dans des moyens de mémorisation 19 du terminal 5, de manière à pouvoir délivrer rapidement ce contenu à l'instant propice anticipé.

En variante, on surveille une activité de logiciel ou de matériel du terminal 5, afin d'identifier un instant pour délivrer un contenu spontané.

On peut surveiller par exemple la mise sous tension du terminal 5. Dans ce cas, on inhibe avantageusement l'identification d'instant pour délivrer un contenu spontané pendant un intervalle de temps prédéfini, de préférence sur des horaires de repos, par exemple la nuit, de manière à ne pas déranger l'utilisateur durant son sommeil.

Selon un autre exemple, on surveille l'activité de télécommunication du terminal 5, afin d'identifier un instant pour délivrer un contenu spontané.

Préférentiellement, l'activité de télécommunication est une activité de transmission montante et/ou descendante, permettant de détecter un appel entrant ou sortant, une session de communication pair à pair établie, ou encore le début et/ou la fin d'un tel appel ou d'une telle session de communication.

À l'instant identifié pour délivrer un contenu spontané selon l'une des méthodes présentées ci-dessus, on sélectionne à l'étape 37 un contenu spontané disponible.

À cet effet, on prend en compte tout paramètre du jeu de paramètres pour délivrer des contenus spontanés pertinent pour sélectionner un contenu personnalisé et adapté à l'utilisateur.

En alternative, on peut aussi prendre en compte des données d'utilisation du terminal 5. En effet, lorsqu'un appel entrant ou sortant est établi le contenu spontané doit être sélectionné avec un format particulier.

On délivre alors à l'étape 41 le contenu sélectionné à l'instant identifié.

Selon un premier mode de réalisation, le contenu spontané disponible est sélectionné parmi des contenus enregistrés dans les moyens de mémorisation 19 au niveau du terminal 5, par exemple suite à l'anticipation d'un instant propice pour délivrer un contenu spontané, et par conséquent suite à la réception en avance de contenus spontanés envoyés par le système 3.

Selon un deuxième mode de réalisation, lorsqu'il n'y a pas de contenus spontanés enregistrés, on transmet à destination du système 3 une information concernant l'identification d'un instant pour délivrer un contenu spontané, c'est l'étape 36. Cette information peut être transmise sous la forme d'un événement de disponibilité d'emplacement, en anglais « Slot Availability Event ».

On peut prévoir également qu'on transmet un ou plusieurs paramètres du jeu de paramètres pour délivrer des contenus spontanés utile au système 3 pour sélectionner un contenu spontané adapté à l'utilisateur.

A l'étape 38, le système 3 :
- reçoit l'information concernant l'identification d'un instant pour délivrer un contenu spontané et au moins un paramètre du jeu de paramètres pour délivrer des contenus spontanés utile pour sélectionner un contenu spontané,
- sélectionne un contenu spontané à présenter à l'utilisateur à partir des paramètres reçus, et
- envoie le contenu sélectionné à destination du terminal 5.

A la suite de cette étape 38, on reçoit ce contenu spontané et on délivre ce contenu spontané disponible reçu à l'étape 41.

Ainsi, les contenus spontanés sont personnalisés et délivrés à l'utilisateur au bon moment, de sorte que les contenus délivrés sont susceptibles d'intéresser l'utilisateur.

En outre, afin de réagir rapidement lorsque l'utilisateur est intéressé par un contenu spontané délivré, on détecte une interaction de l'utilisateur avec le contenu spontané délivré, puis on transmet au système 3 une information concernant l'interaction de l'utilisateur, c'est l'étape 43.

Le système 3 reçoit alors et analyse cette information, afin de fournir le service approprié.

Cette interaction peut être par exemple l'actionnement d'une touche d'un clavier du terminal 5 dont le numéro correspond à un numéro d'un choix proposé, ou encore la sélection d'un élément actif du contenu délivré lorsqu'il est affiché.

On peut ainsi imaginer que l'utilisateur sélectionne une touche active « En savoir plus » qui permet de recevoir des données complémentaires en relation avec le contenu spontané délivré ou encore que l'utilisateur sélectionne une touche active qui permet d'établir une communication avec l'annonceur du contenu spontané, par exemple par e-mail ou par appel téléphonique. Dans l'exemple suivant, on considère que l'utilisateur sélectionne une touche « En savoir plus ».

Dans ce cas, l'information transmise peut être une requête de transmission d'au moins une donnée complémentaire en relation avec un contenu spontané délivré, et associée à la sélection de la touche « En savoir plus ».

Grâce à cette information transmise, le système 3 sélectionne au moins une donnée complémentaire puis envoie cette donnée complémentaire à destination du terminal 5.

Cette donnée complémentaire peut être choisie parmi la liste comportant une image, des caractères, un lien vers un site internet ou encore un contenu multimédia par exemple en utilisant la technologie du « streaming ».

Afin de permettre à l'utilisateur de contrôler la réception de données entrantes, on détecte une donnée complémentaire entrante au niveau du terminal 5, c'est l'étape 45.

On peut alors à l'étape 47 informer l'utilisateur pour lui permettre d'accepter ou de refuser la réception de cette donnée complémentaire entrante.

Lorsque la réception est acceptée, on délivre la donnée complémentaire, à l'étape 49.

Ainsi, à chaque interaction de l'utilisateur avec un contenu spontané délivré, un tel procédé permet des transmissions de contenus successives pour répondre aux attentes de l'utilisateur.

On comprend également qu'avec un tel procédé, les contenus spontanés à délivrer à l'utilisateur sont sélectionnés de façon à correspondre à l'utilisateur, et les interactions entre l'utilisateur du terminal 5 et le système 3 sont gérées au niveau du terminal 5 de manière à permettre à l'utilisateur d'avoir un certain contrôle sur les contenus et les données qui lui sont proposés.

Bien entendu, on comprend aisément que l'ordre de mise en oeuvre de certaines étapes de ce procédé pour délivrer des contenus spontanés peut également être intervertit sans aller à l'encontre de l'esprit de la présente invention.

### Procédé de transmission de contenus spontanés sur un réseau :

Afin de pouvoir délivrer un contenu spontané selon le procédé décrit précédemment, ce contenu doit être disponible, par exemple au niveau du terminal 5.

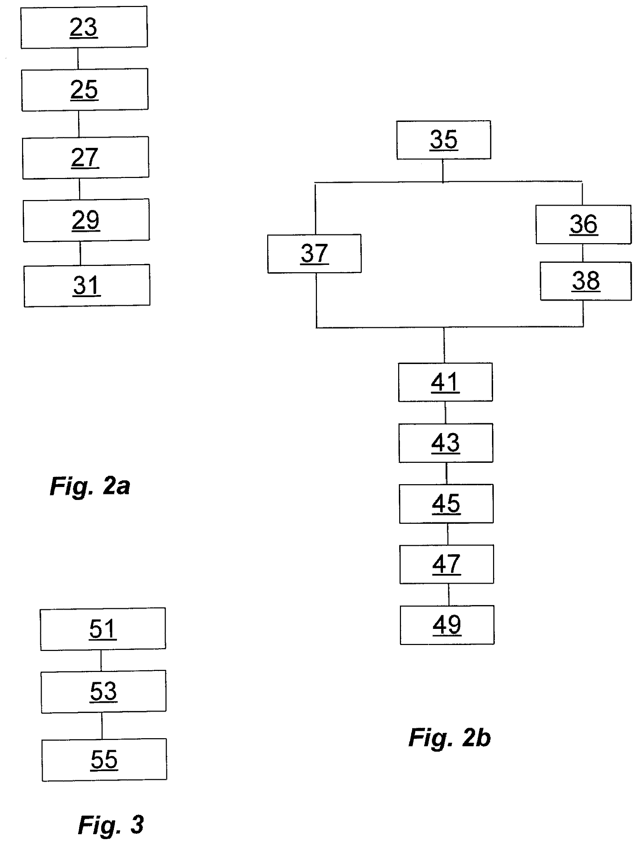

Afin que le terminal 5 soit toujours suffisamment pourvu en contenus spontanés personnalisés et adaptés à l'utilisateur, on propose ci-après en référence à la figure 3, un procédé de transmission de contenus spontanés sur un réseau 1 selon l'invention.

Un tel procédé permet au système 3 de mettre régulièrement à jour des paramètres relatifs à un utilisateur donné afin de pouvoir transmettre à cet utilisateur des contenus spontanés qui lui sont personnalisés et adaptés.

Pour cela lors d'une étape 51, on reçoit une information concernant l'identification d'un instant pour délivrer un contenu spontané, transmise par le terminal 5, par exemple sous la forme d'un événement de disponibilité d'emplacement, en anglais « Slot Availability Event ». De façon préférentielle, cette information est transmise avant l'instant identifié.

De plus, cette information est accompagnée d'au moins un paramètre d'un jeu de paramètres pour délivrer des contenus spontanés utile pour sélectionner un contenu spontané adapté à un utilisateur donné du terminal 5.

Grâce aux paramètres reçus, le système 3 peut définir ou mettre à jour des paramètres relatifs à cet utilisateur permettant de sélectionner des contenus spontanés qui lui sont personnalisés et adaptés.

Le système 3 peut alors sélectionner dans une étape 53 au moins un contenu spontané personnalisé et adapté à l'utilisateur, et à l'étape 55 envoyer à destination du terminal 5, le ou les contenus spontanés sélectionnés.

On comprend donc qu'avec un tel procédé, les contenus spontanés envoyés par le système 3 à destination du terminal 5 sont adaptés régulièrement afin de correspondre au mieux aux besoins et aux centres d'intérêts de l'utilisateur du terminal 5, tout en prenant compte par exemple des caractéristiques particulières du terminal de cet utilisateur.

En référence à la figure 4, on va maintenant présenter un exemple illustratif et non limitatif d'un terminal et d'un système distant pour la mise en oeuvre d'un procédé de gestion d'un jeu de paramètres pour délivrer un contenu spontané, d'un procédé pour délivrer des contenus spontanés, et d'un procédé pour fournir des contenus spontanés selon l'invention.

Comme on le constate sur la figure 4, le terminal 5 comprend avantageusement au moins un moyen principal de gestion 7.

Préférentiellement, ce moyen principal de gestion 7 est apte à transmettre une information de mise sous tension du terminal 5 au système 3, signalant ainsi au système 3 que le terminal 5 est prêt à recevoir des contenus spontanés.

Le système 3 comprend judicieusement au moins un moyen de traitement pour recevoir cette information de mise sous tension du terminal 5, et établir une procédure d'authentification du terminal 5, afin de sécuriser les échanges.

Une fois l'authentification terminée et validée, le terminal 5 est apte à recevoir des contenus spontanés.

Pour la mise en oeuvre d'un procédé de gestion d'un jeu de paramètres pour délivrer des contenus spontanés selon l'invention comportant les étapes 23 à 31, ce moyen principal de gestion 7 est apte à mémoriser le jeu de paramètres.

De plus, ce moyen principal de gestion 7 est avantageusement relié à au moins un moyen de lecture 9 du terminal 5 apte à délivrer à l'étape 23, un contenu à l'utilisateur, par exemple en utilisant une interface de programmation applicative, en anglais « Application Programming Interface » (API).

Judicieusement, le moyen principal de gestion 7 est également relié à au moins un moyen de gestion d'interactions 11 apte à :
- détecter à l'étape 25 si l'utilisateur génère sur son terminal une réaction favorable ou non au contenu délivré, pour découvrir par exemple de nouveaux centres d'intérêt de l'utilisateur,
- traduire cette réaction en un paramètre représentatif, et
- transmettre ce paramètre représentatif au moyen principal de gestion 7.

Lorsqu'une réaction de l'utilisateur est détectée, le moyen principal de gestion 7 est alors apte à :
- associer au moins un paramètre contextuel au contenu délivré,
- mémoriser à l'étape 27, le paramètre représentatif de la réaction de l'utilisateur, et au moins un paramètre contextuel associé au contenu délivré dans le jeu de paramètres pour délivrer des contenus spontanés de manière à adapter ces derniers, par exemple aux centres d'intérêt découverts,
- générer à l'étape 31, des informations quantitatives concernant les réactions de l'utilisateur, et les synthétiser sous la forme d'un rapport d'activité, et
- envoyer le rapport d'activité du terminal 5 à destination du système 3, par exemple de façon périodique.

Par ailleurs, le moyen principal de gestion 7 est avantageusement relié à au moins un moyen de planification 13 apte à établir à l'étape 29 une planification pour délivrer au moins un contenu spontané sélectionné, de manière à déterminer au moins un instant propice pour délivrer ce contenu.

Par ailleurs, pour la mise en oeuvre d'un procédé pour délivrer des contenus spontanés selon l'invention comportant les étapes 35 à 49, le moyen de planification 13 est apte à identifier à l'étape 35 un instant pour délivrer un contenu spontané.

En variante, le moyen principal de gestion 7 est relié à au moins un moyen de surveillance 15 apte à surveiller une activité du terminal 5, par exemple une activité de logiciel ou de matériel, afin d'identifier un instant pour délivrer un contenu spontané.

De préférence, le moyen de surveillance 15 est apte à surveiller la mise sous tension du terminal 5. Dans ce cas, le terminal 5 comprend avantageusement au moins un moyen de traitement non représenté apte à inhiber l'identification d'un instant pour délivrer un contenu spontané, sur un intervalle de temps prédéfini, de préférence sur des horaires de repos.

Selon une variante de réalisation, le moyen de surveillance 15 est apte à surveiller une activité de télécommunication du terminal 5.

En alternative, un tel moyen de surveillance 15 peut comporter au moins un capteur intégré ou externe par exemple apte à transmettre une information sur la localisation géographique du terminal 5 ou encore une information temporelle.

Bien entendu ce moyen de surveillance 15 peut également être apte à détecter lorsqu'un contenu spontané est délivré.

Judicieusement, les moyens de planification 13 et de surveillance 15 sont aptes à transmettre à destination du moyen principal de gestion 7 une information concernant l'identification d'un instant pour délivrer un contenu, par exemple sous la forme d'un événement de disponibilité d'emplacement, en anglais « Slot Availability Event ».

Lorsque l'identification d'un instant est déterminée à partir d'une planification, le moyen de planification est apte à transmettre cette information concernant l'identification d'un instant pour délivrer un contenu spontané à l'avance.

Avantageusement, le moyen principal de gestion 7 est apte à :
- recevoir cette information concernant l'identification d'un instant pour délivrer un contenu spontané, et
- vérifier si au moins un contenu spontané est enregistré.

Lorsqu'au moins un contenu spontané est enregistré, le moyen principal de gestion 7 est apte à :
- transmettre une requête de sélection d'un contenu spontané ; cette requête peut comporter au moins un ou plusieurs paramètres du jeu de paramètres pour délivrer des contenus spontanés utiles pour sélectionner un contenu spontané adapté à l'utilisateur, et
- transmettre une requête pour délivrer le contenu sélectionné.

De façon avantageuse, le moyen principal de gestion 7 est relié à un moyen de sélection 17 apte à recevoir un requête de sélection d'un contenu spontané, et apte à sélectionner à l'étape 37 un contenu spontané disponible parmi des contenus spontanés enregistrés par exemple dans les moyens de mémorisation 19 du terminal 5.

En revanche, lorsqu'il n'y a pas de contenus spontanés enregistrés, le moyen principal de gestion 7 est apte à :
- transmettre à l'étape 36 l'information concernant l'identification d'un instant pour délivrer un contenu spontané, à destination du système 3, par exemple sous la forme d'un événement de disponibilité d'emplacement, en anglais « Slot Availability Event » ; et au moins un paramètre du jeu de paramètres pour délivrer des contenus spontanés utille pour la sélection d'un contenu spontané, et
- recevoir un contenu spontané envoyé par le système 3 à l'étape 38,

Par ailleurs, le moyen de lecture 9 est apte à :
- recevoir une requête pour délivrer un contenu spontané, et
- délivrer à l'étape 41, un contenu disponible sélectionné à l'étape 37 ou reçu à l'étape 38.

Par ailleurs, lorsqu'un contenu spontané est délivré, le moyen de gestion d'interactions 11 est apte à :
- détecter une interaction de l'utilisateur avec le contenu spontané délivré,
- générer et transmettre au moyen principal de gestion 7 une information concernant l'interaction de l'utilisateur.

De façon préférée, le moyen principal de gestion 7 est apte à :
- recevoir et transmettre au système 3 cette information concernant l'interaction de l'utilisateur à l'étape 43,
- recevoir une information de présence d'une donnée complémentaire entrante envoyée par le système 3, et
- transmettre une requête d'information de l'utilisateur.

À cet effet, le moyen principal de gestion 7 est relié à au moins un moyen de détection 21 apte à détecter une donnée complémentaire entrante envoyée par le système 3, et transmettre au moyen principal de gestion 7 une information de présence d'une donnée complémentaire entrante.

Avantageusement, le moyen de lecture 9 est apte à :
- recevoir une requête d'information de l'utilisateur, et
- informer l'utilisateur d'une donnée complémentaire entrante.

Dans ce cas, on peut prévoir que le terminal 5 comprend au moins un moyen de traitement pour accepter ou refuser la réception de la donnée complémentaire entrante.

En outre, pour la mise en oeuvre d'un procédé de transmission de contenus spontanés sur un réseau 1 selon l'invention comportant les étapes 51 à 55, le système 3 comprend selon un mode de réalisation préféré au moins un moyen de traitement pour recevoir :
- une information concernant l'identification d'un instant pour délivrer un contenu spontané, transmise par le terminal 5 par exemple sous la forme d'un événement de disponibilité d'emplacement, en anglais « Slot Availability Event », et
- au moins un paramètre d'un jeu de paramètres pour délivrer des contenus spontanés utile pour sélectionner un contenu spontané adapté à un utilisateur donné du terminal 5.

A cet effet, on peut prévoir que le système 3 comprend un module de gestion de paramètres dans lequel il mémorise les paramètres reçus relatifs à cet utilisateur. Dans ce cas, le système 3 comporte avantageusement une interface de communication entre le terminal 5 et le module de gestion de paramètres.

Avantageusement, le système 3 comprend au moins un moyen de traitement pour sélectionner au moins un contenu spontané personnalisé et adapté à l'utilisateur à partir des paramètres reçus.

En variante, on peut prévoir une plateforme de services apte à sélectionner au moins un contenu personnalisé et adapté à l'utilisateur à partir des paramètres relatifs à l'utilisateur. Dans ce cas, le système comprend avantageusement une interface de communication entre le module de gestion de paramètres et la plateforme de services.

De façon préférée, le système 3 comprend au moins un moyen de traitement pour envoyer à destination du terminal 5, le ou les contenus spontanés sélectionnés.

On comprend donc que le jeu de paramètres pour délivrer des contenus spontanés à un utilisateur donné évolue constamment de façon à toujours correspondre au mieux à l'utilisateur par rapport à ses centres d'intérêts du moment, et permet de sélectionner et de présenter à l'utilisateur des contenus spontanés qui lui sont personnalisés et adaptés, à un moment avantageux.

## Revendications

1. Terminal (5) de communication comprenant au moins un moyen de traitement configuré pour :
délivrer au moins un contenu,
détecter si l'utilisateur génère sur son terminal une réaction favorable ou non audit contenu délivré,
mémoriser dans un jeu de paramètres pour délivrer des contenus spontanés au moins un paramètre représentatif de ladite réaction de l'utilisateur et au moins un paramètre contextuel associé audit contenu délivré de manière à adapter ledit jeu de paramètres,
établir une planification pour délivrer au moins un contenu spontané sélectionné à partir dudit jeu de paramètres adapté, de manière à déterminer au moins un instant propice pour délivrer ledit contenu sélectionné,
**caractérisé en ce que** le moyen de traitement est configuré pour :
identifier un instant pour délivrer un contenu spontané en fonction de ladite planification,
sélectionner un contenu spontané disponible à partir dudit jeu de paramètres pour délivrer des contenus spontanés, et
délivrer ledit contenu sélectionné à l'instant identifié.

2. Terminal selon la revendication 1, dans lequel ledit moyen de traitement est configuré pour générer au moins une information quantitative concernant les réactions de l'utilisateur de manière à établir un rapport d'activité concernant l'utilisateur.

3. Terminal selon l'une des revendications 1 et 2, dans lequel le moyen de traitement est configuré pour transmettre une information concernant l'identification d'un instant pour délivrer un contenu spontané, de manière à recevoir des contenus spontanés à délivrer.

4. Terminal selon la revendication 3, dans lequel le moyen de traitement est configuré pour transmettre l'information concernant l'identification dudit instant avant l'instant identifié.

5. Terminal selon l'une des revendications 1 à 4, dans lequel le moyen de traitement est configuré pour surveiller la mise sous tension du terminal, afin d'identifier au moins un instant pour délivrer un contenu spontané.

6. Terminal selon l'une des revendications 1 à 4, dans lequel le moyen de traitement est configuré pour surveiller une activité de télécommunication du terminal afin d'identifier au moins un instant pour délivrer un contenu spontané.

7. Procédé de gestion d'un jeu de paramètres pour délivrer des contenus spontanés à un utilisateur d'un terminal, exécuté par ledit terminal, comprenant les étapes suivantes :
on délivre au moins un contenu à l'utilisateur,
on détecte si l'utilisateur génère sur son terminal une réaction favorable ou non audit contenu délivré,
on mémorise dans le jeu de paramètres pour délivrer des contenus spontanés au moins un paramètre représentatif de ladite réaction de l'utilisateur et au moins un paramètre contextuel associé audit contenu délivré de manière à adapter ledit jeu de paramètres,
on établit via le terminal une planification pour délivrer au moins un contenu spontané sélectionné à partir dudit jeu de paramètres adapté, de manière à déterminer un instant propice pour délivrer ledit contenu sélectionné,
**caractérisé en ce que** :
on identifie un instant pour délivrer un contenu spontané en fonction de ladite planification,
on sélectionne un contenu spontané disponible à partir d'un jeu de paramètres pour délivrer des contenus spontanés comportant au moins un paramètre représentatif d'une réaction de l'utilisateur par rapport à un contenu délivré et au moins un paramètre contextuel associé audit contenu délivré, et
on délivre ledit contenu sélectionné à l'instant identifié.

8. Réseau (1) comprenant un terminal (5) selon l'une des revendications 1 à 6 et un système (3) distant apte à fournir des contenus spontanés comprenant au moins un moyen de traitement configuré pour :
recevoir une information concernant l'identification d'un instant pour délivrer des contenus spontanés, ladite information étant transmise avant l'instant identifié,
recevoir au moins un paramètre d'un jeu de paramètre pour délivrer des contenus spontanés,
sélectionner un contenu spontané à partir desdits paramètres reçus, et
transmettre le contenu spontané sélectionné au terminal.

## Patentansprüche

1. Kommunikations-Endgerät (5), umfassend mindestens ein Verarbeitungsmittel, das konfiguriert ist, um:
mindestens einen Inhalt auszuliefern,
zu ermitteln, ob der Benutzer auf seinem Endgerät eine günstige Reaktion oder nicht auf den ausgelieferten Inhalt erzeugt,
zur Auslieferung von spontanen Inhalten mindestens einen Parameter, der für die Reaktion des Benutzers repräsentativ ist, und mindestens einen Kontextparameter, der dem ausgelieferten Inhalt zugeordnet ist, in einem Parameterset derart zu speichern, dass das Parameterset angepasst wird,
eine Planung zu erstellen, um mindestens einen spontanen Inhalt, ausgewählt aus dem angepassten Parameterset, derart auszuliefern, dass mindestens ein Moment bestimmt wird, der für die Auslieferung des ausgewählten Inhalts günstig ist,
**dadurch gekennzeichnet, dass** das Verarbeitungsmittel konfiguriert ist, um:
einen Moment für die Auslieferung eines spontanen Inhalts in Abhängigkeit von der Planung festzustellen,
einen verfügbaren spontanen Inhalt aus dem Parameterset auszuwählen, um spontane Inhalte auszuliefern, und
den ausgewählten Inhalt zum festgestellten Moment auszuliefern.

2. Endgerät nach Anspruch 1, wobei das Verarbeitungsmittel konfiguriert ist, um mindestens eine quantitative Information bezüglich der Reaktionen des Benutzers derart zu erzeugen, dass ein Aktivitätsbericht bezüglich des Benutzers erstellt wird.

3. Endgerät nach einem der Ansprüche 1 und 2, wobei das Verarbeitungsmittel konfiguriert ist, um eine Information bezüglich der Feststellung eines Moments für die Auslieferung eines spontanen Inhalts derart zu übertragen, dass auszuliefernde spontane Inhalte empfangen werden.

4. Endgerät nach Anspruch 3, wobei das Verarbeitungsmittel konfiguriert ist, um die Information bezüglich der Feststellung des Moments vor dem festgestellten Moment zu übertragen.

5. Endgerät nach einem der Ansprüche 1 bis 4, wobei das Verarbeitungsmittel konfiguriert ist, um das Unterspannungversetzen des Endgeräts zu überwachen, um mindestens einen Moment für die Auslieferung eines spontanen Inhalts festzustellen.

6. Endgerät nach einem der Ansprüche 1 und 4, wobei das Verarbeitungsmittel konfiguriert ist, um eine Telekommunikationsaktivität des Endgeräts zu überwachen, um mindestens einen Moment für die Auslieferung eines spontanen Inhalts festzustellen.

7. Verfahren für die Verwaltung eines Parametersets zur Auslieferung von spontanen Inhalten an einen Benutzer eines Endgeräts, ausgeführt von dem Endgerät, das die folgenden Schritte umfasst:
Ausliefern mindestens eines Inhalts an einen Benutzer, Ermitteln, ob der Benutzer auf seinem Endgerät eine günstige Reaktion oder nicht auf den ausgelieferten Inhalt erzeugt,
Speichern, zur Auslieferung von spontanen Inhalten mindestens eines Parameters, der für die Reaktion des Benutzers repräsentativ ist, und mindestens eines Kontextparameters, der dem ausgelieferten Inhalt zugeordnet ist, in einem Parameterset derart, dass das Parameterset angepasst wird,
Erstellen, über das Endgerät, einer Planung, um mindestens einen spontanen Inhalt, ausgewählt aus dem angepassten Parameterset, derart auszuliefern, dass ein Moment bestimmt wird, der für die Auslieferung des ausgewählten Inhalts günstig ist,
**dadurch gekennzeichnet, dass**:
ein Moment für die Auslieferung eines spontanen Inhalts in Abhängigkeit von der Planung festgestellt wird,
ein verfügbarer spontaner Inhalt aus dem Parameterset ausgewählt wird, um spontane Inhalte auszuliefern, die mindestens einen Parameter aufweisen, der für eine Reaktion des Benutzers in Bezug auf einen ausgelieferten Inhalt repräsentativ ist, und mindestens einen Kontextparameter, der dem ausgelieferten Inhalt zugeordnet ist, und
der ausgewählte Inhalt zum festgestellten Moment ausgeliefert wird.

8. Netzwerk (1), umfassend ein Endgerät (5) nach einem der Ansprüche 1 bis 6 und ein entferntes System (3), das imstande ist, spontane Inhalte bereitzustellen, umfassend mindestens ein Verarbeitungsmittel, das konfiguriert ist, um:
eine Information zu empfangen, die die Feststellung eines Moments für die Auslieferung spontaner Inhalte betrifft, wobei die Information vor dem festgestellten Moment übertragen wird,
mindestens einen Parameter eines Parametersets zu empfangen, um spontane Inhalte auszuliefern,
auf der Basis der empfangenen Parameter einen spontanen Inhalt auszuwählen, und
den ausgewählten spontanen Inhalt an das Endgerät zu übertragen.

## Claims

1. A communication terminal (5) comprising at least one processing means configured to:
deliver at least one item of content,
detect whether the user generates on his or her terminal a favourable reaction to said delivered content or not,
save in a set of parameters for delivering spontaneous content at least one parameter representative of said reaction of the user and at least one contextual parameter associated with said delivered content in such a way as to adapt said set of parameters,
establish a plan for delivering at least one item of spontaneous content selected based on said adapted set of parameters, in such a way as to determine at least one moment suitable for delivering said selected content,
**characterised in that** the processing means is configured to:
identify a moment for delivering an item of spontaneous content based on said plan,
select an available item of spontaneous content based on said set of parameters for delivering spontaneous content, and
deliver said selected content at the identified moment.

2. A terminal according to claim 1, wherein said processing means is configured to generate at least one item of quantitative information concerning the reactions of the user, in such a way as to establish an activity report concerning the user.

3. A terminal according to one of the claims 1 and 2, wherein the processing means is configured to transmit an item of information concerning the identification of a moment for delivering an item of spontaneous content, in such a way as to receive spontaneous content to be delivered.

4. A terminal according to claim 3, wherein the processing means is configured to transmit the information concerning the identification of said moment before the identified moment.

5. A terminal according to one of the claims 1 to 4, wherein the processing means is configured to monitor the powering on of the terminal, in order to identify at least one moment for delivering an item of spontaneous content.

6. A terminal according to one of the claims 1 to 4, wherein the processing means is configured to monitor a telecommunications activity of the terminal in order to identify at least one moment for delivering spontaneous content.

7. A method for managing a set of parameters for delivering spontaneous content to a user of a terminal, performed by said terminal, concerning the following steps:
at least one item of content is delivered to the user,
it is detected whether the user generates on his or her terminal a favourable reaction to said delivered content or not,
at least one parameter representative of said reaction of the user and at least one contextual parameter associated with said delivered content are saved in a set of parameters for delivering spontaneous content in such a way as to adapt said set of parameters,
a plan is established for delivering at least one item of spontaneous content selected based on said adapted set of parameters, in such a way as to determine at least one moment suitable for delivering said selected content,
**characterised in that**:
a moment is identified for delivering an item of spontaneous content based on said plan,
an available item of spontaneous content is selected based on said set of parameters for delivering spontaneous content, and
said selected content is delivered at the identified moment.

8. A network (1) comprising a terminal (5) according to one of the claims 1 to 6 and a remote system (3) capable of providing spontaneous content comprising at least one processing means configured to:
receive an item of information concerning the identification of a moment for delivering spontaneous content, said information being transmitted before the identified moment,
receive at least one parameter of a set of parameters for delivering spontaneous content,
select an item of spontaneous content based on said received parameters, and transmit the selected spontaneous content to the terminal.
